# EUROPEAN PATENT SPECIFICATION

(11) **EP 4 005 396 B1**
(45) Date of publication and mention of the grant of the patent: **25.02.2026**
(21) Application number: 21275170.5
(22) Date of filing: 29.11.2021
(51) Int. Cl.: A23G 9/14, A23G 9/28, A23G 9/30, A23G 9/50

(54) **APPARATUS AND METHOD FOR MANUFACTURING A FROZEN CONFECTIONERY PRODUCT**
VORRICHTUNG UND VERFAHREN ZUR HERSTELLUNG EINES GEFRORENEN KONFEKTPRODUKTS
APPAREIL ET PROCÉDÉ DE FABRICATION D'UN PRODUIT DE CONFISERIE CONGELÉ

(30) Priority: 30.11.2020 GB 202018788
(43) Date of publication of application: 01.06.2022
(73) Proprietor: Froneri Ice Cream UK Limited, Northallerton, Yorkshire DL7 9UL (GB)
(72) Inventor: APASA, Ryad Faddel, Northallerton, DL7 9UL (GB)
(74) Representative: Wood, Graham

(56) References cited:
- GB-A- 1 232 364
- US-A- 2 334 654
- US-A- 4 188 768
- US-A- 5 322 432
- US-B2- 7 267 075
- US-B2- 7 513 213

## Description

The invention to which this application relates is apparatus and a method which is for use in the manufacturing of a frozen confectionery product and particularly, although not necessarily exclusively, an ice-cream product which includes a wafer and ice-cream with the product being manufactured under factory conditions in which the cone shaped wafer cavity is filled with a portion of ice-cream.

When cone shaped wafers with ice cream are manufactured in factory environments there is a need to maintain the quality and consistency of the product as it is passed from various items of machinery to allow the final ice cream filled product to be packaged so as to be transported to a point of sale at which the same can be bought and consumed, or may be bought and then stored in a freezer in a domestic premises and subsequently consumed.

It is found that during the manufacturing process, there is a need for the wafer material of the cone, to be kept in a substantially dry, low moisture, condition so as to avoid the wafer becoming "soggy" due to an increase in moisture content as if it does become soggy the condition of the cone will remain in that less customer friendly condition to the point of consumption which can result in complaints from customers as to the condition of the product. Thus, if this problem occurs the general overall impression of the quality of the product can be adversely affected. In order to avoid this, it is known to apply a layer of chocolate to the interior, cavity wall of the cone so that the chocolate effectively seals the interior surface of the cone to a sufficient extent such that when the ice-cream is placed into the cavity, the same contacts with the chocolate which acts as a moisture barrier to prevent the ice-cream contacting with the wafer and, in turn, prevents the ice cream form turning the wafer soggy by having increased moisture.

This is generally a successful procedure and is used by the majority of manufacturers of products of this type. However, even though this provision of the chocolate barrier does have an improved effect, there are still problems in that if the chocolate layer is not applied correctly and there is resultant poor coverage of the said surface of the cone with the chocolate, that the ice-cream can still contact with at least portions of the wafer cone. Furthermore, the control of the temperature of the environment in which the product is manufactured, if not done correctly, can mean that the chocolate does not set properly or may set and then become softer again and so access between the ice-cream and wafer is possible.

Furthermore, if the chocolate is not allowed to set before the ice-cream is introduced then effectively, the ice-cream and chocolate form a mixture which allows moisture to be absorbed from that mixture and cause the wafer to become soggy.

There are a number of conventional methods by which the layer of chocolate can be applied and the cone filled with ice-cream and these include the following.

One approach is to use a filling apparatus and system which causes the preformed wafer cones, to be held in position on apparatus and a layer of the chocolate to be sprayed on the interior surface of the same. The cone, with the layer of chocolate applied, is then transferred to a cooling tunnel to set the chocolate and, from the cooling tunnel, is then passed to apparatus to allow the ice-cream to be deposited into the interior cavity of the cone and, in turn, the lid is applied and the sleeve crimped and the product is then moved to a hardening tunnel in which the final product is frozen and, in turn is packaged. It will be appreciated that this system requires a significant amount of space to be provided in the factory due to the provision of the cooling tunnel for the chocolate and the freezing tunnel for the ice-cream filled cones, requires significant energy to be provided in order to allow the refrigeration and freezing units to be operated correctly to the required low temperatures and is a relatively complex process in that it requires three transfer systems at stages of the process and a pick and place operation to allow the frozen products to be removed for packaging.

Generally therefore the requirements for two filling machines, one for the chocolate and one for ice-cream, is expensive and can be difficult to maintain and also requires greater cleaning so that overall, the system is relatively complex and expensive.

An alternative system is to again spray the chocolate onto the interior surface of the cone and then pass the same to a station at which nitrogen is applied in order to set the chocolate. The cone is then passed to the ice-cream filling apparatus, the lidding and crimping station and then to freezing tunnel and for packaging as with the previous system. However, the use of nitrogen is expensive, relatively difficult to control and requires very fine tuning to ensure that exposure to the nitrogen, is not so great as to render the chocolate so brittle that the same will crack and hence allow the absorption of the subsequently filled ice-cream through the cracks in the barrier and into the wafer cone. Furthermore, gas extraction apparatus is required to protect the operators of the machinery and located in the environment and there can also be cleaning problems with regard to the apparatus which is used.

A further form of apparatus is to combine the cooling and freezing tunnels into one hardening tunnel but this requires a greater number of pick and place systems to be provided and uses two filling machines, one for the chocolate and one for the ice-cream and associated extra maintenance for the additional apparatus which is provided.

US4188768 discloses a method and apparatus for manufacturing an ice cream product including a cone with a chocolate interior lining. There is a step after the chocolate has been sprayed of pressing ("tamping") the chocolate against the wafer before the ice cream is applied. US 7267075 discloses a means to clasp a wafer cone so that it is able to be held in any orientation. The applied chocolate is allowed to solidify during "dwell time" between stations.

It will therefore be appreciated that the problem is significant and has been addressed in a number of different ways until now and, while each of the possible solutions has had some beneficial effect, all, as explained above, still have significant problems.

The aim of the present invention is therefore to address the problem and to provide an efficient and economical solution to the same, thereby allowing the implementation of the advantages to be obtained and for the improvement to the final product to be achieved.

In a first aspect of the invention there is provided apparatus for the formation of a frozen confectionery product, said apparatus including retaining means for holding a wafer item, means for moving the wafer item and the retaining means to a first location at which chocolate is applied to form a barrier layer in a cavity of the wafer item, then to a second location at which a portion of ice-cream is applied into the cavity of the wafer item, with said barrier layer located between the ice cream and the wafer item, said retaining means being located on a continuous circuit, characterised in that the retaining means and wafer item pass at least around one lap of the circuit when moving between the said first and second locations, a mechanical engagement is provided which acts to retain the wafer item within the retaining means and/or a rubber or other material which acts as a vacuum trap is used as part of the retaining means to further encourage the wafer item to be retained in position, and the speed of movement of the retaining means and wafer item between said first and second locations along said continuous circuit is selected and controlled by control means with respect to the ambient environmental conditions at the time of use of the apparatus such that the chocolate applied to the wafer item is substantially set prior to the wafer item reaching the second location for the application of the said portion of ice-cream into the cavity.

The said duration of movement is sufficient to allow the chocolate to substantially set in substantially ambient environmental conditions without the need for the same to pass through a chiller or freezer unit intermediate the chocolate and ice cream application locations.

In one embodiment, the location at which the chocolate is applied to the walls of the cavity and the location at which the ice-cream is placed into the cavity in the holder are on the same side of the track circuit.

In one embodiment the said wafer item is cone shaped.

In one embodiment, the transport of the cone between the location at which the chocolate is applied and the location at which the ice-cream is applied, is via an indexing apparatus which allows the movement of the cone in a stepwise manner around a circuit between the said locations.

In an embodiment a plurality of retaining means are provided and are set out in rows with the direction of movement along the track substantially perpendicular to the longitudinal axes of said rows of retaining means.

Typically, at each index, the rows of retaining means are held stationery for a period of time and the performance of placement of the wafer items into a row of empty retaining means, the application of chocolate to a row of wafer items and the application of portions of ice cream into a row of chocolate coated cavities is performed.

Typically the additional steps of removal of a row of frozen confectionery products and/or washing and cleaning a row of empty retaining means are performed when stationary.

In one embodiment, the speed of movement between the said locations, is calculated with respect to the distance of travel between the said locations and the ambient environmental conditions with the aim being to ensure that, given the ambient conditions at a particular time of use of the apparatus, the layer of chocolate will have set sufficiently so as to form the barrier layer on the inner surface of the cone.

In one embodiment, the chocolate is sprayed onto the inner surface of the cavity.

In one embodiment, the indexing means sequentially moves the plurality of rows of cones in a linear manner past the said chocolate and ice-cream filling stations with direction of movement being perpendicular to the longitudinal axes of said rows.

Typically, at a location selected on the circuit there is provided a cleaning apparatus which is used to clean an empty row of retaining means when positioned at the cleaning means, so that each empty row will be cleaned before it reaches the point of placing new wafer items in the row. It will be appreciated that the cleaning apparatus will be used on each successive row with the rows on either side containing cones on which the chocolate layer is setting.

In one embodiment, the cleaning means includes a first part for insertion into the retaining means and the application of a cleaning fluid to the same to clean the holder and a second part which, when the first part is located in the retaining means, is positioned so as to substantially enclose the said retaining means and first part to prevent the passage of cleaning fluid to adjacent cones.

In one embodiment, the adjacent cones lie to opposing sides of the row of retaining means which has been cleaned and above the row of said retaining means which is being cleaned.

In one embodiment, the cone, once the chocolate layer has been applied thereto, will be moved by the indexing means through a circuit of movement such that for a proportion of the movement, the cone is inverted. However, typically by the time the cone has reached the side of the circuit at which the same is inverted, the chocolate layer will have set to a sufficient level to prevent or minimise any chocolate from dripping through the cone opening under gravity.

In one embodiment, the chocolate is applied onto the cone with the presence of a paper or other sheet material layer adjacent to the opening into the cavity so as to trap the said sheet material layer in location with the cone and act as part of the packaging of the finished article.

Typically, once the cone has been filled with the portion of ice-cream, the said cone, is lidded and crimped and is then removed from the indexing means, typically by pick and place apparatus and moved to a freezing tunnel to freeze the ice cream and then to packaging apparatus at which the same is made ready for transport to a cold store or retail outlet.

In one embodiment additional cooling media may be provided which can be selectively used to cool the chocolate layer on the cone as the same is being moved between said chocolate applying and ice cream applying locations.

In one embodiment the circuit is located so as to have a top side and a bottom side and during movement through the bottom side the wafer items are inverted.

Typically the placing, chocolate application, ice cream application and removal locations are all performed at the top side of the circuit.

In one embodiment the sequence of locations with respect to the movement of the wafer items through the circuit is:
a-wafer items placing apparatus
b- chocolate application apparatus
c- movement around one circuit
d- ice cream application apparatus
e- product removal apparatus

In one embodiment the penultimate stage is the lidding and crimping apparatus.

Typically the ice cream application location is downstream from the chocolate application apparatus.

Typically the retaining means are provided in rows of locations means and said wafer items are placed into and removed from the locations means one row at a time and the chocolate and ice cream are applied one row at a time.

In one embodiment the indexing of movement is a double index movement. Typically at each index the products are held stationery for a period of time and the performance of placement, chocolate and ice cream applications and product removal and washing and cleaning are performed.

In a further aspect of the invention, there is provided a method of manufacturing a frozen confectionery product using the apparatus as previously described, said method comprising the steps of placing a plurality of wafer items in rows of retaining means on an indexing apparatus to move the said rows along a continuous circuit, moving successive rows of said wafer items to a chocolate application location to apply the chocolate thereto and moving successive rows of said wafer items with the chocolate applied thereto to a location for the application of the portions of ice-cream into the respective cavities on a row by row basis and then moving the said ice-cream filled article to a freezing tunnel to form the food product and characterised by controlling the speed of movement of the retaining means along the continuous circuit with respect to the ambient environmental conditions at the time of use of the apparatus so that the duration of movement of the said wafer item with the chocolate layer applied thereto between the location of application of the chocolate and the location of application of the portion of ice-cream is such that the time taken for the successive rows of wafer items with chocolate applied thereto is sufficient to allow the chocolate to have substantially set in the ambient temperature before reaching the ice cream application location.

Typically, the duration is calculated and controlled by the selection of the time of travel between the said locations and/or the distance of travel between said locations and, if required, may include the application of a cooling medium to the holder as it is moved between said locations.

In one embodiment, the cooling medium is only applied when the ambient environmental conditions mean that the temperature in the environment is raised above a predetermined level so that extra cooling is required. Typically, such conditions would be possible in the height of summer or if the temperature control apparatus which is used in the environment is malfunctional.

Typically the wafer item is cone shaped.

In one embodiment, the said chocolate application location and the ice-cream application location are located with respect to the wafer items so that the chocolate and the ice cream are dispensed downwardly into the cavity in the wafer items held in the retaining means.

Typically, the movement means between the said locations, includes a plurality of rows of retaining means for respective cones and which are moved in a sequential stepwise manner.

In one embodiment, the cones are located on retaining means in a particular sequence which, in one embodiment, comprises a first retaining means, with a cone with only the wafer material, the next cone being a cone which the chocolate layer has already been applied to and has set and is to be filled with ice-cream and so on in a repeated manner.

In one embodiment, the application of the chocolate layer to the first cone and the application of the ice-cream portion to the second cone may occur from the same apparatus and simultaneously. Typically, after the ice-cream portion has been inserted into the cone, and, if required, lidding and crimping operations performed, the cones will be removed from the indexing apparatus and moved to a freezing environment and subsequently to packaging.

In one embodiment said rows are moved in an indexed manner between the said chocolate application location and the ice-cream application locations which are located on a first side of the track circuit

In one embodiment cleaning means are operated to clean empty rows of the retaining means after the frozen confectionery product has been removed therefrom and prior to wafer items being placed therein.

In one embodiment, on a first side of the track the wafer items are placed into the retaining means a row at a time, chocolate is applied at the application location one row at a time, portions of ice cream are applied at an application location one row at a time, and frozen confectionery products are removed, one row at a time.

In a further aspect not part of the invention there is provided a frozen confectionery product including a wafer item, chocolate barrier layer and ice cream portion manufactured in accordance with the method and using the apparatus as herein defined.

Specific embodiments of the invention are now described with reference to the accompanying drawings; wherein:
Figure 1a illustrates, schematically, the apparatus and method steps in accordance with one embodiment of the invention;
Figure 1b illustrates one embodiment of indexing of the product around a track circuit of the apparatus;
Figures 2a-e illustrate in a schematic manner, the indexed movement of the products in accordance with an embodiment of the invention;
Figure 3 illustrates a portion of the track circuit of the apparatus in accordance with one embodiment of the invention;
Figure 4 illustrates cleaning apparatus in accordance with one embodiment of the invention; and
Figure 5 illustrates a wafer item with a sleeve in accordance with one embodiment of the invention, and

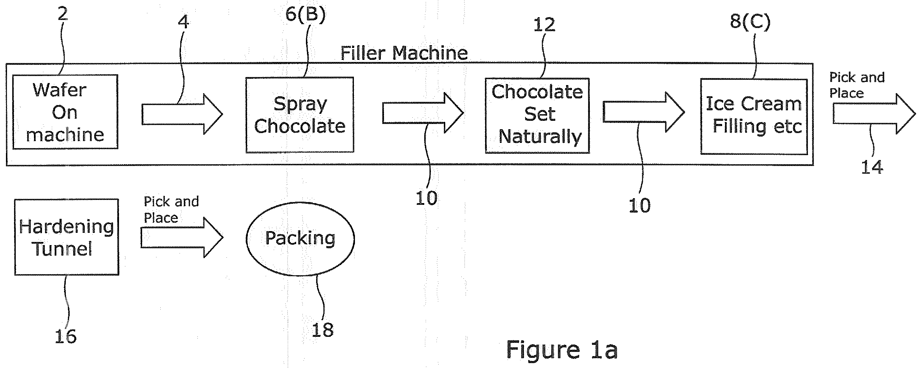

Referring firstly to Figure 1a, there is illustrated in a schematic manner, the stages of the apparatus and method in accordance with one embodiment of the invention and which stages are followed in order to form an ice-cream containing frozen confectionery product from start to finish and packaging.

In a first step 2 of the application, wafer items for the frozen confectionery products, which are typically formed from sugar, flour and water based food stuffs, and formed, in accordance with this embodiment, into the shape of a cone which has a cavity defined by internal walls of the cone, are placed into a row of retaining means. The wafer items are relatively low in moisture and can be brittle but this is desired as it gives a "crunch" sensation when the same are eaten and which is regarded as being desirable to consumers of ice-cream containing products of the type to which the invention relates. The wafer items are placed in a sequential manner onto rows of retaining means 20 of the movement means track circuit 10 which is provided and located in association with application apparatus to allow chocolate and ice cream portions to be sequentially applied to the wafer item.

The rows of wafer items are moved, 4, to station 6(B) to the chocolate application location in order to apply chocolate, typically via spray heads, to the walls of an interior cavity of the cone shaped wafer items in that row. When the chocolate layer has been applied, the wafer items are moved around the track circuit 10 so that during the movement time the chocolate layer substantially sets 12 naturally in the ambient conditions in the factory and without the need for the same to pass through chilling or freezing tunnels. The wafer items then reach-an ice cream portion application location 8(C) after more than one circuit of movement from the chocolate application location 6(B), and at the application location 8(C) ice cream portions are applied into each, now chocolate lined, cavity of the wafer items in the same row, typically via piping apparatus. The set chocolate acts as a moisture barrier layer between the wafer item and the ice cream and so maintains the integrity of the and "crispness" of the wafer.

Once filled with the ice-cream, the products in that row are moved to a station at which the same are removed from the retaining means 20 and passed 14 into a hardening or freezing tunnel 16 in which the finished product is frozen for a sufficient period of time so as to bring the same into a frozen confectionery product condition at which the same is then packaged 18 and transported for storage and/or to a retail premises for purchase.

It should be appreciated that the rows are moved in an indexed step wise manner around the circuit so that there is a sequence of, a period of movement, followed by a stationery period during which chocolate is applied, ice cream is applied, wafer items are moved into position and removed from retaining means in respective rows.

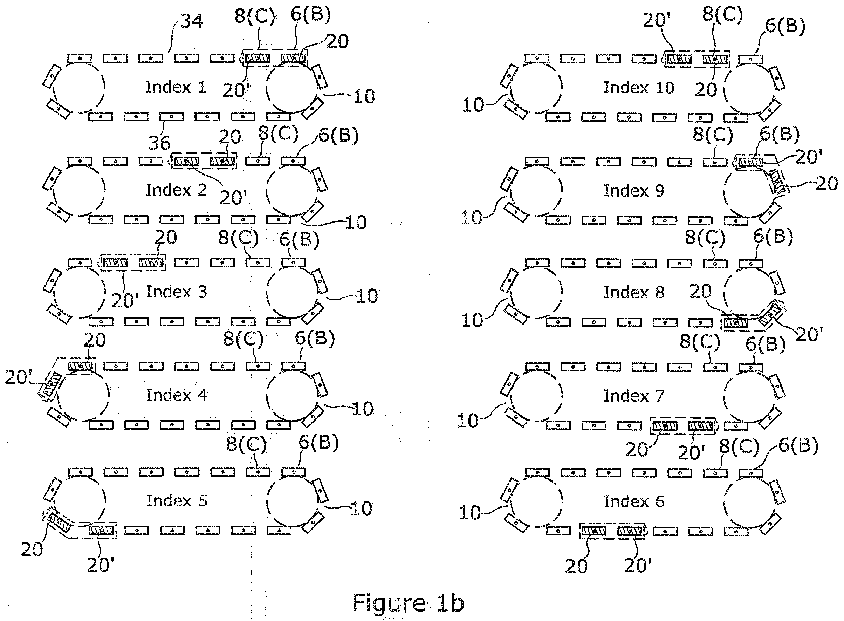

An example of the indexing movement of the rows of retaining means 20 along the track circuit 10 is shown in Figure 1b in which the apparatus and track circuit 10 is operated as a double index apparatus and with an odd numbers of rows of retaining means 20 in the circuit 10, also referred to as odd numbers of lamella. The track circuit is of a length and/or configuration and the movement of the retaining means is controlled to be at a speed along the track circuit so as to allow the required movement along the circuit for the retaining means and in particular the rows of wafer items which have been chocolate lined to be of a sufficient time so as to allow the chocolate to set naturally before the ice cream portion is applied at a different station location once the movement around the track circuit has been completed.

Thus, in Figure 1b there is shown the chocolate application location 6(B) and the ice cream application location 8(C). The movement around the track circuit 10 in this embodiment is achieved by ten double index movements, Index 1 to Index 10, as shown. Thus in Index 1 the row of retaining means 20 with empty wafer items located therein starts at chocolate application location 6(B) at which chocolate is applied, typically by spraying, into the wafer items cavity and then, having completed one lap around the track circuit 10 the row of chocolate lined wafer items is located at ice cream application location 8(C), with the chocolate having set, and therefore allowing the ice cream portions to then be applied at the location 8(C). At the same time, the retaining means row 20' which has already been around the circuit once is located, as shown at index 1, at the ice cream application location 8(C) and, once the ice cream portions have been applied the completed products can be removed from the retaining means row 20' downstream and typically when still on the top or first side 34 of the track circuit.

Thus, due to the odd number of rows on the track circuit, when the retaining means row 20 has reached index 9 and index 10 the retaining means row has changed position relative to the locations 6(B) and 8(C) such that when the row 20 reaches index 10 it is in the correct position for the application of the ice cream portions.

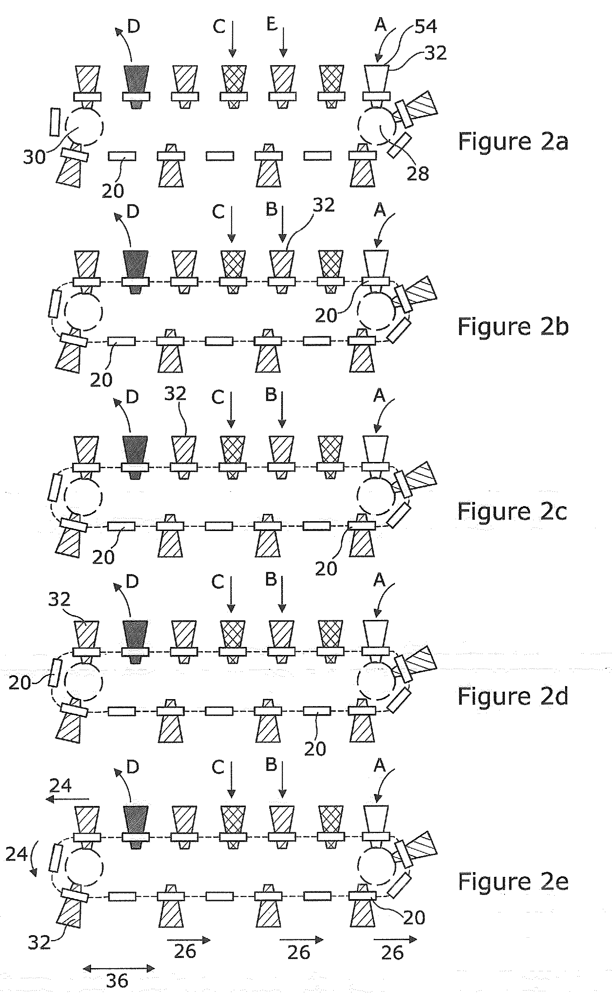

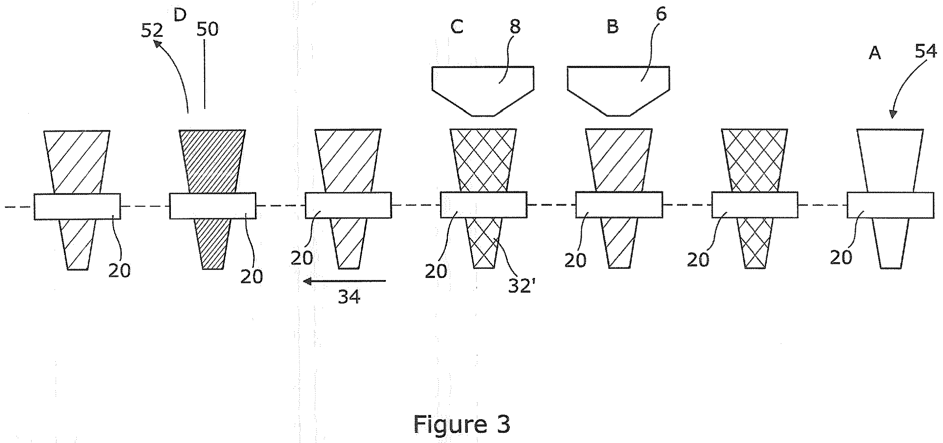

An example of movement of the retaining means rows along the track circuit 10 is now shown with respect to Figures 2a-e and Figure 3. For the ease of illustration, in Figures 2a-e and Figure 3 the retaining means rows which hold empty wafer items are shown with no hatching, the retaining means rows which hold wafer items to which the chocolate has been applied are shown with single hatching, the retaining means rows which hold wafer items which have been moved around the track circuit 10 and in which the chocolate will have set are shown with double hatching and the retaining means rows which hold wafer items which are coated with chocolate and filled with ice cream portions and are therefore in a final form and ready to be removed from the track circuit, are fully shaded.

The chocolate application location 6(B) and the ice cream application location 8(C) are shown along with the movement means track circuit 10 and the series of rows of retaining means 20 are provided in a linear manner along the indexing circuit and the same are moved along the circuit 10 so that they follow a path as indicated by arrows 24,26 about drive rolls 28,30 and which is in a direction perpendicular to the longitudinal axes of the rows of retaining means.

A number of empty wafer items are placed 54 in a row 32 of retaining means 20 at location A as the rows are moved in a stepwise manner and wafer items being placed in position in the row 32 is illustrated in Figure 2a.

Referring now to the path of this row 32 of wafer items around the track circuit 10. The row 32 of retaining means is moved by control means in a double index movement to the position shown in Figure 2b to the chocolate application location 6(B) to allow a layer of chocolate, in a liquid form, to be applied, typically by spraying, onto the internal surface of a cavity formed in each of the wafer items and is applied to each of the wafer items in that row 32 to thereby form a barrier layer between the cavity and the interior surface of the wafer items. With the chocolate layer applied, it is then necessary for the chocolate to be allowed to set and harden so as to form the barrier and this is achieved by the wafer items in the row 32 being retained in the retaining means 20 and moved in a double index stepwise manner as indicated in Figures 2c-e and then continuing to be moved around the track circuit as indicated by arrows 24, 26 in Figure 2e to bring the now chocolate lined wafer items in the row 32 to the position shown in Figure 3 so as to be positioned under the ice-cream filling location 8(C) and which is located downstream of the chocolate application location 6(B). The chocolate lined wafer items of row 32 are now referred to as row 32' and this row of wafer items with the chocolate having been applied thereto and which are indicated by single hatching in Figures 2a-e and Figure 3, have travelled a distance equal to one lap of the track circuit 10 plus the distance between the chocolate application location 6(B) and the ice cream application location 8(C) so as to maximise the time available for the chocolate to set before the ice cream portions are applied. This means that when the row 32' of cones is positioned at the ice cream filling station 8(C), the chocolate will have set and hardened so as to form the barrier which prevents moisture from the ice-cream which is placed into the cavity at that location from passing into the wafer item and thereby prevents the moisture content of the wafer item increasing and detracting from the quality of the same.

When the row 32' of wafer items with the chocolate applied arrive at the ice cream application location 10, the ice cream is applied and the row of finished products are moved along the path 34 and are removed 52 from the respective retaining means 20 in that row and as illustrated in more detail in Figure 3 at station 50(D).

These steps are repeated for each row of retaining means and when the rows are stationery so that, simultaneously, a row of wafer items can be placed into a row of retaining means, a chocolate layer can be applied to wafer items in another row, ice cream portions can be applied into another including wafer items which have a set chocolate layer, and another row of the finished product can be removed. This is repeated in a sequential manner.

It will therefore be appreciated that the interval of time between the wafer items being at location 6(B) at which the chocolate is applied and then reaching the location 8(C) at which the ice-cream is applied to the wafer items is sufficient to allow the chocolate to harden to form the barrier with the required moisture resistant characteristics before the ice cream is applied whilst, at the same time, allowing the chocolate to harden in a manner which does not require excessive use of factory storage space, or chilling or freezing apparatus or the application of expensive refrigerants intermediate the chocolate application location 6(B) and ice cream application location 8(C), or expensive maintenance.

This system allows a plurality of wafer items to be held in rows, one in each retaining means 20 in the row. On the first side 34 of the track the rows pass the locations A,B,C,D as shown in Figure 3 and in every second row of retaining means between the removal location 50(D) and the placement station 54(A) and along the bottom side of the circuit 36 as illustrated in Figures 2a-e.

The empty rows of retaining means 20 between the rows of wafer items which already have chocolate applied, are, prior to the same reaching the chocolate application station 6(B), filled with empty wafer items which are placed in the same at the location 54(A) so that a new row of empty wafer items is provided and the applications process repeated.

If it is determined that the ambient conditions on any particular day or time are such that the temperature and/or humidity, are higher than normal ambient conditions, then additional apparatus may be used to further cool the chocolate at least at one part of the apparatus as the wafer items move around the track circuit but the general aim is to allow the hardening or setting to be achieved in normal ambient temperature conditions and thereby avoid the need for additional chilling tunnels, the application of refrigerant gases or the like as would be the case in a conventional system.

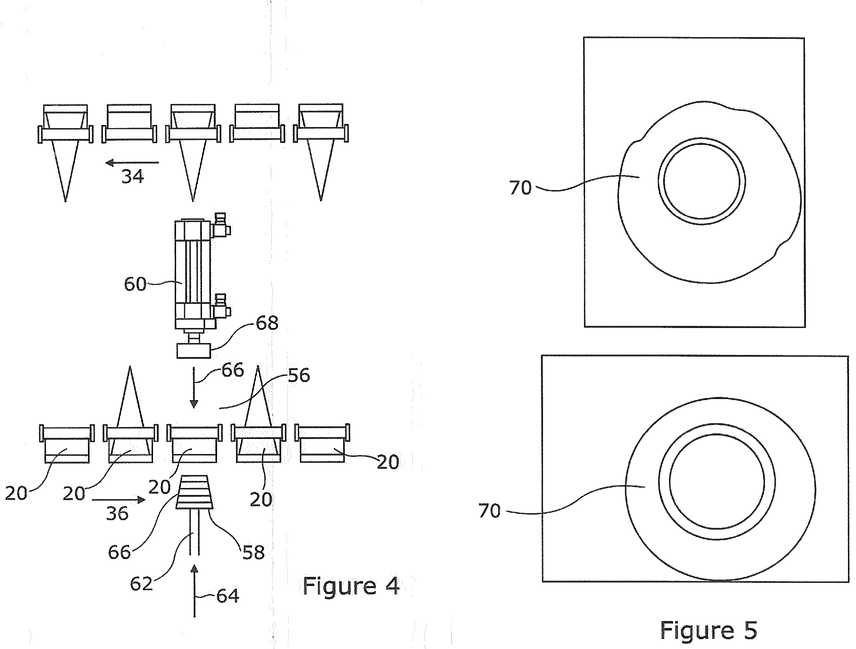

This therefore means that on the second or under side 36 of the track circuit, there are provided rows of empty retaining means 20 and, in accordance with Figure 4, which illustrates part of the first side of the track circuit 34 and part of the second side 36 of the indexing means, when the retaining means pass along the second side, each row of empty retaining means is stopped in sequence at a cleaning station 56 which is formed of a first assembly 58 and a second assembly 60. The first assembly comprises a shaft 62 and is movable as indicated by arrow 64, while it rotates, to move the free end of the shaft, which has a sponge or other cleaning arrangement 66 located thereon, into a retaining means 20 in that row and assemblies are provided for each of the retaining means in the row. A supply of liquid, including a detergent, is provided through the shaft and into the sponge material and, in turn, is transferred to the inner face of the retaining means, so as to clean the same. At the same time, it is important that the liquid, which is used to clean the holder, does not contaminate the adjacent rows of retaining means 20 and more importantly, the wafer items located therein, or the wafer items held in the retaining means in the on the top or first side 34 of the circuit. In order to prevent this, the second assembly or part 60, is moved in a direction opposing the movement of the first assembly, as indicated by arrow 66, and the second assembly includes a seal 68 which seals the opening of the retaining means and thereby prevents the liquid and detergent from leaking or escaping the retaining means whilst it is cleaned.

Thus, by the time the rows of empty retaining means reach the position at which the new empty wafer items are placed therein, the retaining means for that row will have been cleaned.

It should also be appreciated that the cleaning system shown in Figure 4, can be used to advantage in other forms of apparatus in which wafer items are held in retaining means on movement means on track and so as to prevent the leaking or passage of the cleaning material and liquids and hence prevent the same from potentially contaminating adjacent products.

In order to retain the wafer items in the retaining means 20, when the rows of the same are passing along the second side 36 of the track circuit and the wafer items are inverted 180 degrees with respect to their position on the first side of the track circuit and so the cone shape is typically "upside down" and could fall out of the retaining means, a packaging sleeve 70 shown in Figure 5, is provided and onto which the chocolate is sprayed in addition to, and at the same time, being applied to the internal surface of the cavity of the wafer item. The packaging sleeve can be used as a further means of engaging the wafer item with the retaining means 20. In addition, a mechanical engagement is provided which acts to retain the cone within the retaining means and in addition, or alternatively, a rubber or other material which acts as a vacuum trap is used as part of the retaining means to further encourage the wafer item to be retained in position.

The apparatus and method as herein described it is particularly effective when the chocolate which is applied to the wafer items is a "couveture" type of chocolate which does not require to be exposed to particularly high temperature in order to melt and apply and therefore will set relatively quickly.

Other apparatus and components may be utilised to provide particular effects on the finished product such as, for example, if there is a customer requirement or expectation for the base of the wafer item to have a quantity of chocolate therein, then if required, steps can be taken to introduce a small portion of chocolate at the tip of the wafer item prior to the application of the ice-cream portion into the cavity.

Thus, in accordance with the invention, there is provided apparatus and a method which allows a frozen confectionery product to be created to a desired standard with a greater reliability, with reduced environmentally unfriendly apparatus being required to be used, reducing energy consumption, reducing the space required for apparatus and/or risk to manufacturing personnel whilst, at the same, reducing the possibility of customer complaints with regard to the product.

## Claims

1. Apparatus for the formation of a frozen confectionery product, said apparatus including retaining means (20) for holding a wafer item, means for moving the wafer item and the retaining means (20) to a first location (6B) at which chocolate is applied to form a barrier layer in a cavity of the wafer item, then to a second location (8C) at which a portion of ice-cream is applied into the cavity of the wafer item, with said barrier layer located between the ice cream and the wafer item, said retaining means being located on a continuous circuit (10), **characterised in that** the retaining means (20) and wafer item pass at least around one lap of the circuit (10) when moving between the said first and second locations, a mechanical engagement is provided which acts to retain the wafer item within the retaining means and/or a rubber or other material which acts as a vacuum trap is used as part of the retaining means to further encourage the wafer item to be retained in position, and the speed of movement of the retaining means (20) and wafer item between said first and second locations (6B,8C) along said continuous circuit (10) is selected and controlled by control means with respect to the ambient environmental conditions at the time of use of the apparatus such that the chocolate applied to the wafer item is substantially set (12) prior to the wafer item reaching the second location (8C) for the application of the said portion of ice-cream into the cavity.

2. Apparatus according to claim 1 **characterised in that** the location (6B) at which the chocolate is applied to the walls of the cavity and the location (8C) at which the portion of ice-cream is placed into the cavity are both on a first side (34) of the circuit (10).

3. Apparatus according to any of the preceding claims **characterised in that** the control means for the movement of the retaining means (20) along the circuit (10) include an indexing apparatus to allow the movement of the retaining means in a stepwise manner between the said locations (6B, 8C).

4. Apparatus according to claim 3 **characterised in that** the indexing movement is a double index movement.

5. Apparatus according to any of the preceding claims **characterised in that** a plurality of retaining means (20) are provided and are set out in rows (32,32') with the direction of movement along the circuit substantially perpendicular to the longitudinal axes of said rows of retaining means.

6. Apparatus according to claim 5 **characterised in that** the rows (32,32') of retaining means (20) are held stationery for a period of time and the performance of placement of the wafer items into a row of empty retaining means, the application of chocolate to a row (32,32') of wafer items and the application of portions of ice cream into a row (32,32') of chocolate coated cavities is performed.

7. Apparatus according to claim 6 **characterised in that** the additional steps of removal of a row (32,32') of frozen confectionery products and/or washing and cleaning a row of empty retaining means (20) are performed when stationary.

8. Apparatus according to any of the preceding claims **characterised in that** cleaning means (56) are provided to clean a row (32,32') of empty retaining means (20) positioned at the cleaning means so that each empty retaining means is cleaned before it reaches the point of placing a wafer item therein.

9. Apparatus according to claim 8 **characterised in that** the cleaning means (56) includes a first part (58) for insertion into the retaining means (20) and the application of a cleaning fluid and a second part (60) which, when the first part is located in the retaining means, is positioned so as to substantially enclose the said retaining means and first part to prevent the passage of cleaning fluid externally thereof.

10. Apparatus according to any of the preceding claims **characterised in that** during movement along the said circuit the wafer items are located upright when passing along the first side (34) of the circuit and inverted 180 degrees when passing along a second side (36) of the circuit.

11. A method of manufacturing a frozen confectionery product using the apparatus of claim 1 said method comprising the steps of placing a plurality of wafer items in rows (32,32') of retaining means (20) on an indexing apparatus to move the said rows along a continuous circuit (10), moving successive rows of said wafer items to a chocolate application location (6B) to apply the chocolate thereto and moving successive rows of said wafer items with the chocolate applied thereto to a location (8C) for the application of the portions of ice-cream into the respective cavities on a row by row basis and then moving the said ice-cream filled article to a freezing tunnel (16) to form the food product and **characterised by** controlling the speed of movement of the retaining means (20) along the continuous circuit (10) with respect to the ambient environmental conditions at the time of use of the apparatus so that the duration of movement of the said wafer item with the chocolate layer applied thereto between the location (6B) of application of the chocolate and the location (8C) of application of the portion of ice-cream is such that the time taken for the successive rows of wafer items with chocolate applied thereto is sufficient to allow the chocolate to have substantially set in the ambient temperature before reaching the ice cream application location (8C).

12. A method according to claim 11 **characterised in that** the said duration is calculated and controlled by the selection of the speed of travel between the said locations, the distance of travel between said locations and/or the configuration of the circuit (10).

13. A method according to any of claims 11-12 **characterised in that** said rows are moved in an indexed manner between the said chocolate application location and the ice-cream application location located on a first side (34) of the circuit (10).

14. A method according to any of claims 11-13 **characterised in that** cleaning means (56) are operated to clean empty rows of retaining means after the frozen confectionery product has been removed therefrom and prior to wafer items being placed therein.

15. A method according to any of claims 11-14 wherein on a first side (34) of the circuit the wafer items are placed into the retaining means a row at a time, chocolate is applied at the application location, one row at a time, portions of ice cream are applied at an application location one row at a time, and frozen confectionery products are removed, one row at a time.

## Patentansprüche

1. Vorrichtung zur Herstellung eines gefrorenen Konfektprodukts, wobei die genannte Vorrichtung Folgendes beinhaltet: Haltemittel (20) zum Aufnehmen eines Waffelstücks, Mittel zum Bewegen des Waffelstücks und des Haltemittels (20) zu einem ersten Ort (6B), an dem Schokolade aufgebracht wird, um in einer Höhlung des Waffelstücks eine Barriereschicht zu bilden, dann zu einem zweiten Ort (8C), an dem eine Portion Speiseeis in die Höhlung des Waffelstücks eingebracht wird, wobei die genannte Barriereschicht sich zwischen dem Speiseeis und dem Waffelstück befindet, wobei sich die genannten Haltemittel auf einer ununterbrochenen Bahn (10) befinden, **dadurch gekennzeichnet, dass** das Haltemittel (20) und das Waffelstück bei der Bewegung zwischen dem genannten ersten und zweiten Ort zumindest eine Runde der Bahn (10) zurücklegen, ein mechanischer Eingriff bereitgestellt ist, der zum Festhalten des Waffelstücks in dem Haltemittel wirkt, und/oder ein Kautschuk oder anderes Material, das als eine Vakuumfalle wirkt, als Teil des Haltemittels verwendet wird, um das Festhalten des Waffelstücks in Position weiter zu fördern, und die Bewegungsgeschwindigkeit des Haltemittels (20) und des Waffelstücks zwischen dem genannten ersten und zweiten Ort (6B, 8C) entlang der genannten ununterbrochenen Bahn (10) durch Steuermittel zur Zeit der Verwendung der Vorrichtung in Bezug auf die Umgebungsbedingungen der Umgebung gesteuert wird, so dass die auf das Waffelstück aufgebrachte Schokolade im Wesentlichen erstarrt (12) ist, bevor das Waffelstück den zweiten Ort (8C) zum Einbringen der genannten Portion Speiseeis in die Höhlung erreicht.

2. Vorrichtung nach Anspruch 1, **dadurch gekennzeichnet, dass** der Ort (6B), an dem die Schokolade auf die Wände der Höhlung (8C) aufgebracht wird, und der Ort (8C), an dem die Portion Speiseeis in die Höhlung gegeben wird, sich beide auf einer ersten Seite (34) der Bahn (10) befinden.

3. Vorrichtung nach einem der vorhergehenden Ansprüche, **dadurch gekennzeichnet, dass** das Steuermittel für die Bewegung des Haltemittels (20) entlang der Bahn (10) eine Taktbewegungsvorrichtung beinhaltet, um die schrittweise Bewegung der Haltemittel zwischen den genannten Orten (6B, 8C) zu ermöglichen.

4. Vorrichtung nach Anspruch 3, **dadurch gekennzeichnet, dass** die Taktbewegung eine Doppeltaktbewegung ist.

5. Vorrichtung nach einem der vorhergehenden Ansprüche, **dadurch gekennzeichnet, dass** eine Mehrzahl von Haltemitteln (20) bereitgestellt ist und in Reihen (32, 32') angeordnet sind, wobei die Bewegungsrichtung entlang der Bahn zu den Längsachsen der genannten Reihen von Haltemitteln im Wesentlichen lotrecht ist.

6. Vorrichtung nach Anspruch 5, **dadurch gekennzeichnet, dass** die Reihen (32, 32') von Haltemitteln (20) für einen Zeitraum unbewegt gehalten werden und die Durchführung des Einlegens der Waffelstücke in eine Reihe leerer Haltemittel, das Aufbringen von Schokolade auf eine Reihe (32, 32') von Waffelstücken und das Einbringen von Speiseeisportionen in eine Reihe (32, 32') von schokoladebeschichteten Höhlungen durchgeführt wird.

7. Vorrichtung nach Anspruch 6, **dadurch gekennzeichnet, dass** die zusätzlichen Schritte des Entnehmens einer Reihe (32, 32') gefrorener Konfektprodukte und/oder des Waschens und Reinigens einer Reihe leerer Haltemittel (20) im unbewegten Zustand durchgeführt werden.

8. Vorrichtung nach einem der vorhergehenden Ansprüche, **dadurch gekennzeichnet, dass** Reinigungsmittel (56) zum Reinigen einer Reihe (32, 32') leerer Haltemittel (20) bereitgestellt sind, die an den Reinigungsmitteln positioniert sind, so dass jedes leere Haltemittel gereinigt wird, bevor es den Punkt für das Einlegen eines Waffelstücks in dasselbe erreicht.

9. Vorrichtung nach Anspruch 8, **dadurch gekennzeichnet, dass** das Reinigungsmittel (56) einen ersten Teil (58) zur Einführung in das Haltemittel (20) und zum Anwenden eines Reinigungsfluids und einen zweiten Teil (60), der wenn der erste Teil sich in dem Haltemittel befindet, so positioniert ist, dass er das genannte Haltemittel und den ersten Teil im Wesentlichen umschließt, um das Austreten von Reinigungsfluid von demselben nach außen zu verhindern, beinhaltet.

10. Vorrichtung nach einem der vorhergehenden Ansprüche, **dadurch gekennzeichnet, dass** die Waffelstücke während der Bewegung entlang der genannten Bahn aufrecht angeordnet sind, wenn sie an der ersten Seite (34) der Bahn entlanggeführt werden, und um 180 Grad gewendet sind, wenn sie an einer zweiten Seite (36) der Bahn entlanggeführt werden.

11. Verfahren zur Herstellung eines gefrorenen Konfektprodukts unter Verwendung der Vorrichtung nach Anspruch 1, wobei das genannte Verfahren die folgenden Schritte umfasst: Einlegen einer Mehrzahl von Haltemitteln (20) in Reihen (32, 32') von Haltemitteln (20) an einer Taktbewegungsvorrichtung zum Bewegen der genannten Reihen entlang einer ununterbrochenen Bahn (10), Bewegen aufeinanderfolgender Reihen der genannten Waffelstücke zu einem Schokoladenaufbringungsort (6B) zum Aufbringen der Schokolade auf denselben und Bewegen aufeinanderfolgender Reihen der genannten Waffelstücke mit der auf denselben aufgebrachten Schokolade zu einem zweiten Ort (8C) zur reihenweisen Einbringung der Speiseeisportionen in die jeweiligen Höhlungen und dann Bewegen des genannten speiseeisgefüllten Artikels zu einem Gefriertunnel (16) zum Herstellen des Lebensmittelprodukts, und **gekennzeichnet durch** Steuern der Geschwindigkeit der Bewegung der Haltemittel (20) entlang der ununterbrochenen Bahn (10) in Bezug auf die Umgebungsbedingungen der Umgebung zur Zeit der Verwendung der Vorrichtung, so dass die Bewegungsdauer des genannten Waffelstücks mit der auf demselben aufgebrachten Schokoladenschicht zwischen dem Ort (6B) der Aufbringung der Schokolade und dem Ort (8C) der Einbringung der Portion Speiseeis so ist, dass die für die aufeinanderfolgenden Reihen von Waffelstücken mit auf denselben aufgebrachter Schokolade benötigte Zeit ausreicht, um zu ermöglichen, dass die Schokolade bei der Umgebungstemperatur im Wesentlichen erstarrt ist, bevor sie den Ort (8C) zur Speiseeiseinbringung erreichen.

12. Verfahren nach Anspruch 11, **dadurch gekennzeichnet, dass** die genannte Dauer durch die Auswahl der Laufgeschwindigkeit zwischen den genannten Orten, der Wegstrecke zwischen den genannten Orten und/oder der Konfiguration der Bahn (10) berechnet und gesteuert wird.

13. Verfahren nach einem der Ansprüche 11 bis 12, **dadurch gekennzeichnet, dass** die genannten Reihen getaktet zwischen dem genannten Schokoladenaufbringungsort und dem Speiseeiseinbringungsort, die sich auf einer ersten Seite (34) der Bahn (10) befinden, bewegt werden.

14. Verfahren nach einem der Ansprüche 11 bis 13, **dadurch gekennzeichnet, dass** Reinigungsmittel (56) zum Reinigen leerer Reihen von Haltemitteln nach dem Entnehmen des gefrorenen Konfektprodukts aus denselben und vor dem Einlegen von Waffelstücken in dieselben betrieben werden.

15. Verfahren nach einem der Ansprüche 11 bis 14, wobei die Waffelstücke auf einer ersten Seite (34) der Bahn jeweils reihenweise in die Haltemittel gegeben werden, am Aufbringungsort jeweils reihenweise Schokolade aufgebracht wird, am Einbringungsort Speiseeisportionen jeweils reihenweise eingebracht werden und gefrorene Konfektprodukte jeweils reihenweise entnommen werden.

## Revendications

1. Appareil de formage d'un produit de confiserie congelé, ledit appareil incluant des moyens de retenue (20) pour maintenir un article gaufrette, des moyens pour déplacer l'article gaufrette et les moyens de retenue (20) jusqu'à une première localisation (6B) à laquelle du chocolat est appliqué afin de former une couche-barrière dans une cavité de l'article gaufrette, puis jusqu'à une deuxième localisation (8C) à laquelle une portion de glace est appliquée dans la cavité de l'article gaufrette, alors que ladite couche-barrière est localisée entre la glace et l'article gaufrette, lesdits moyens de retenue étant localisés sur un circuit continu (10), **caractérisé en ce que** les moyens de retenue (20) et l'article gaufrette parcourent au moins un tour autour du circuit (10) lors de leur déplacement entre lesdites première et deuxième localisations, une mise en prise mécanique est prévue laquelle agit pour retenir l'article gaufrette à l'intérieur des moyens de retenue et/ou un caoutchouc ou autre matériau qui agit en tant que piège à vide est utilisé comme faisant partie des moyens de retenue afin d'encourager davantage l'article gaufrette à être retenu en position, et la vitesse de mouvement des moyens de retenue (20) et de l'article gaufrette entre lesdites première et deuxième localisations (6B, 8C) le long dudit circuit continu (10) est sélectionnée et commandée par des moyens de commande par rapport aux conditions environnementales ambiantes au moment de l'utilisation de l'appareil de telle sorte que le chocolat appliqué à l'article gaufrette soit substantiellement durci (12) avant que l'article gaufrette n'atteigne la deuxième localisation (8C) pour l'application de ladite portion de glace dans la cavité.

2. Appareil selon la revendication 1 **caractérisé en ce que** la localisation (6B) à laquelle le chocolat est appliqué aux parois de la cavité et la localisation (8C) à laquelle la portion de glace est placée dans la cavité se trouvent toutes les deux sur un premier côté (34) du circuit (10).

3. Appareil selon n'importe lesquelles des revendications précédentes **caractérisé en ce que** les moyens de commande pour le mouvement des moyens de retenue (20) le long du circuit (10) incluent un appareil d'indexage pour permettre le mouvement des moyens de retenue suivant une manière pas-à-pas entre lesdites localisations (6B, 8C).

4. Appareil selon la revendication 3 **caractérisé en ce que** le mouvement d'indexage est un mouvement à double index.

5. Appareil selon n'importe lesquelles des revendications précédentes **caractérisé en ce qu'**une pluralité de moyens de retenue (20) sont fournis et sont agencés en rangées (32, 32') alors que le sens de mouvement le long du circuit est substantiellement perpendiculaire aux axes longitudinaux desdites rangées de moyens de retenue.

6. Appareil selon la revendication 5 **caractérisé en ce que** les rangées (32, 32') de moyens de retenue (20) sont maintenues stationnaires pendant un intervalle de temps et la réalisation du placement des articles gaufrettes dans une rangée de moyens de retenue vides, l'application de chocolat à une rangée (32, 32') d'articles gaufrettes et l'application de portions de glace dans une rangée (32, 32') de cavités revêtues de chocolat est effectuée.

7. Appareil selon la revendication 6 **caractérisé en ce que** les étapes additionnelles d'enlèvement d'une rangée (32, 32') de produits de confiserie congelés et/ou de lavage et nettoyage d'une rangée de moyens de retenue vides (20) sont réalisées à l'état stationnaire.

8. Appareil selon n'importe lesquelles des revendications précédentes **caractérisé en ce que** des moyens de nettoyage (56) sont fournis pour nettoyer une rangée (32, 32') de moyens de retenue vides (20) positionnés au niveau des moyens de nettoyage de sorte que chaque moyen de retenue vide est nettoyé avant qu'il n'atteigne le point où un article gaufrette est placé dans celui-ci.

9. Appareil selon la revendication 8 **caractérisé en ce que** le moyen de nettoyage (56) inclut une première partie (58) pour une insertion dans les moyens de retenue (20) et l'application d'un fluide de nettoyage et une deuxième partie (60) qui, lorsque la première partie est localisée dans les moyens de retenue, est positionnée de sorte à enfermer substantiellement lesdits moyens de retenue et la première partie afin d'empêcher le passage du fluide de nettoyage vers l'extérieur de ceux-ci.

10. Appareil selon n'importe lesquelles des revendications précédentes **caractérisé en ce que** durant le mouvement le long dudit circuit les articles gaufrettes se trouvent debout lorsqu'ils passent le long du premier côté (34) du circuit et sont inversés de 180 degrés lorsqu'ils passent le long d'un deuxième côté (36) du circuit.

11. Procédé de fabrication d'un produit de confiserie congelé grâce à l'utilisation de l'appareil de la revendication 1, ledit procédé comprenant les étapes consistant à placer une pluralité d'articles gaufrettes dans des rangées (32, 32') de moyens de retenue (20) sur un appareil d'indexage pour déplacer lesdites rangées le long d'un circuit continu (10), déplacer des rangées successives desdits articles gaufrettes jusqu'à une localisation d'application de chocolat (6B) afin d'appliquer le chocolat sur ceux-ci et déplacer des rangées successives desdits articles gaufrettes avec le chocolat appliqué sur ceux-ci jusqu'à une localisation (8C) pour l'application des portions de glace dans les cavités respectives sur une base rangée par rangée et ensuite déplacer ledit article rempli de glace jusqu'à un tunnel de congélation (16) afin de former le produit alimentaire et **caractérisé par** le fait de commander la vitesse de mouvement des moyens de retenue (20) le long du circuit continu (10) par rapport aux conditions environnementales ambiantes au moment de l'utilisation de l'appareil de sorte que la durée de mouvement dudit article gaufrette avec la couche de chocolat appliquée sur celui-ci entre la localisation (6B) d'application du chocolat et la localisation (8C) d'application de la portion de glace soit telle que le temps pris pour permettre aux rangées successives d'articles gaufrettes avec du chocolat appliqué sur ceux-ci soit suffisant pour permettre au chocolat d'avoir substantiellement durci dans la température ambiante avant d'atteindre la localisation d'application de glace (8C).

12. Procédé selon la revendication 11 **caractérisé en ce que** ladite durée est calculée et commandée par la sélection de la vitesse de déplacement entre lesdites localisations, la distance de déplacement entre lesdites localisations et/ou la configuration du circuit (10).

13. Procédé selon n'importe laquelle des revendications 11-12 **caractérisé en ce que** lesdites rangées sont déplacées suivant une manière indexée entre ladite localisation d'application de chocolat et ladite localisation d'application de glace situées sur un premier côté (34) du circuit (10).

14. Procédé selon n'importe lesquelles des revendications 11-13 **caractérisé en ce que** des moyens de nettoyage (56) sont actionnés pour nettoyer les rangées vides de moyens de retenue une fois que le produit de confiserie congelé a été enlevé de celles-ci et avant que des articles gaufrettes ne soient placés dans celles-ci.

15. Procédé selon n'importe lesquelles des revendications 11-14 dans lequel sur un premier côté (34) du circuit les articles gaufrettes sont placés dans les moyens de retenue, une rangée à la fois, le chocolat est appliqué au niveau de la localisation d'application, une rangée à la fois, des portions de glace sont appliquées au niveau d'une localisation d'application une rangée à la fois, et les produits de confiserie congelés sont enlevés, une rangée à la fois.
